# EUROPEAN PATENT APPLICATION

(11) **EP 1 854 865 A1**
(43) Date of publication of application: **14.11.2007**
(21) Application number: 06713107.8
(22) Date of filing: 06.02.2006
(51) Int. Cl.: C09K 11/78, H01J 11/02

(54) **FLUORESCENT BODY AND PLASMA DISPLAY PANEL**

(30) Priority: 28.02.2005 JP 2005053211
(71) Applicant: Konica Minolta Medical & Graphic, Inc., Tokyo 163-0512 (JP)
(72) Inventor: TSUKADA, Kazuya, a-machi, Hino-shi, Tokyo 1918511 (JP)
(74) Representative: Gille Hrabal Struck Neidlein Prop Roos
(86) International application number: PCT/JP2006/301964
(87) International publication number: WO 2006/092929

(57) **Abstract**

A fluorescent substance comprising a plurality of particles of (Yₓ,Gd₁₋ₓ)BO₃:Eu_{y} (1.4 ≤ x < 0.9, 0 < y ≤ 0.3), wherein a half-band width in a profile of "charge amount vs. number distribution" of the particles measured by a charge amount distribution analyzer is 0.5 - 2.0 (fC/10 µm).

## Description

### TECHNICAL FIELD

The present invention relates to a fluorescent substance which emits red visible light and a plasma display equipped with the same.

### BACKGROUND OF ART

In recent years, "a plasma display panel" has been noted as a display device applied for image display of such as a computer and a television. Said plasma display panel is prevailing widely because a thin and light-weighted type is available with a large image plane. As for the display principle, fluorescent substance layers to emit each color of red, blue and green are provided, and fluorescent substances constituting this fluorescent layers are excited by a discharge phenomenon generated in the interior of a discharge cell to emit visible light of each colors.

As the above-described fluorescent substance, such as (Y, Gd)O₃:Eu to emit red color, BaMgAl₁₀O₁₇:Eu to emit blue color and Zn₂SiO₄:Mn to emit green color are well known, however, there is an inconvenience that in these fluorescent substances, only Zn₂SiO₄:Mn to emit green color is negatively charged while each fluorescent substance to emit red color and blue color is positively charged, resulting in poor discharge characteristics of said fluorescent substance. Therefore, in a technology described in patent literature 1, Zn₂SiO₄:Mn is ground in the manufacturing process or the surface of fluorescent substance is coated with oxide having a positive charge, to positively charge Zn₂SiO₄:Mn, whereby the above described inconvenience is overcome.

Patent Literature 1: JP-A 2003-183650 (hereinafter, JP-A refers to Japanese Patent Publication Open to Public Inspection No.) (Refer to such as paragraph No. 0022)

### DISCLOSURE OF THE INVENTION

### PROBLEMS TO BE SOLVED BY THE INVENTION

Still now, it is difficult to equally charge all of the particles of the above-described fluorescent substances emitting red, blue or green color so as to give an equal amount of charge. When voltage for display is applied to drive a plasma display in which each particle has a different amount of charge, there may cause discharging voltage difference between fluorescent substances (particles) each other and there is a possibility of deteriorated discharge response due to a phenomenon such as discharge variation or a discharge failure.

An object of this invention is to provide a fluorescent substance and a plasma display panel which are excellent in discharge response even in the state that each particle has a different amount of charge.

### MEANS TO SOLVE THE PROBLEMS

The above-described object of this invention is achieved by the following embodiments.
1. A fluorescent substance comprising a plurality of particles of (Yₓ,Gd₁₋ₓ)BO₃:Eu_{y} (1.4 ≤ x < 0.9, 0 < y ≤ 0.3), wherein a half-band width in a profile of "charge amount vs. number distribution" of the particles measured by a charge amount distribution analyzer is 0.5 - 2.0 (fC/10 µm).
2. The fluorescent substance described in aforesaid item 1, wherein a charge amount of each particle is |1.0 - 4.5| (fC/10 µm).
3. The fluorescent substance described in aforesaid item 1 or 2, wherein the number of particles having a positive polarity is over 95% against the total number of particles.
4. The fluorescent substance described in any one of aforesaid items 1 - 3, characterized by being synthesized by a liquid phase method.
5. The fluorescent substance described in any one of aforesaid items 1 - 4, characterized by containing at least one type of elements comprising rare earth elements, alkaline earth elements, and transition metal elements as a co-activator.
6. A plasma display panel equipped with a discharge cell in which a discharge phenomenon is generated, and a fluorescent substance layer which emits fluoresce by being excited in accordance with a discharge phenomenon in the aforesaid discharge cell, wherein the aforesaid fluorescent substance layer contains the fluorescent substance described in any one of items 1 - 5 as a raw material.

### EFFECTS OF THE INVENTION

According to the invention described in aforesaid items
1 - 5, since a half-band width in a profile of "charge amount vs. number distribution" of particles is 0.5 - 2.0 (fC/10 µm), many particles having a charge amount similar to each other are present and said each particle is possible to simultaneously exhibit similar discharge characteristics. Therefore, even in a condition that the charge amount of each particle differs, it is possible to provide a fluorescent substance being excellent in discharge response (refer to the following example).

According to the invention described in aforesaid item 6, since a fluorescent substance layer contains the fluorescent substance described in any one of aforesaid items
1 - 5 as a raw material, due to a similar reason to the above description to provide a plasma display panel being excellent in discharge response (refer to the following example), even in a condition that the charge amount of each particle differs.

### BRIEF DESCRIPTION OF THE DRAWINGS

Fig. 1 is a drawing to show a profile of a charge amount vs. number distribution which is a characteristic of a fluorescent substance.
Fig. 2 is an oblique view of an example of a schematic constitution of a plasma display panel.
Fig. 3 is a drawing to show a schematic constitution of a double jet type reaction apparatus.
Fig. 4 is a drawing to show a profile of a charge amount vs. number distribution of each of fluorescent substances 2, 4 and 6.
Fig. 5 is a drawing to show infrared strength against address cycle time at the time of address discharge of each of plasma display panels 2, 4 and 6.

### DESCRIPTION OF SYMBOLS

1: Double jet type reaction apparatus
8: Plasma display panel
31 (31R): Discharge cell
35 (35R): Fluorescent substance layer

### PREFERRED EMBODIMENTS TO CARRY OUT THE INVENTION

In this invention, "a profile of a charge amount vs. number distribution" means a distribution curve of a charge amount vs. number of particles, which shows how many particles having a certain charge amount are present to provides distribution on the whole particles, when a charge amount of each particle and the number of particles having said charge amount are set and plotted on abscissa and ordinate respectively, and is generally a normal distribution curve.

Further, "a charge amount of each particle" means a charge amount of each one particle, including a standard charge amount which is a charge amount of each particle normalized by particle size thereof, such as a value (q/d) of a charge amount of each particle divided by a particle size of the particle having said charge amount.

In the following, the most preferable embodiment to practice this invention will be explained referring to the drawings. Although there are attached various limitations which are technically preferable to practice this invention, however, the scope of this invention is not limited to the following embodiment and exemplary drawings.

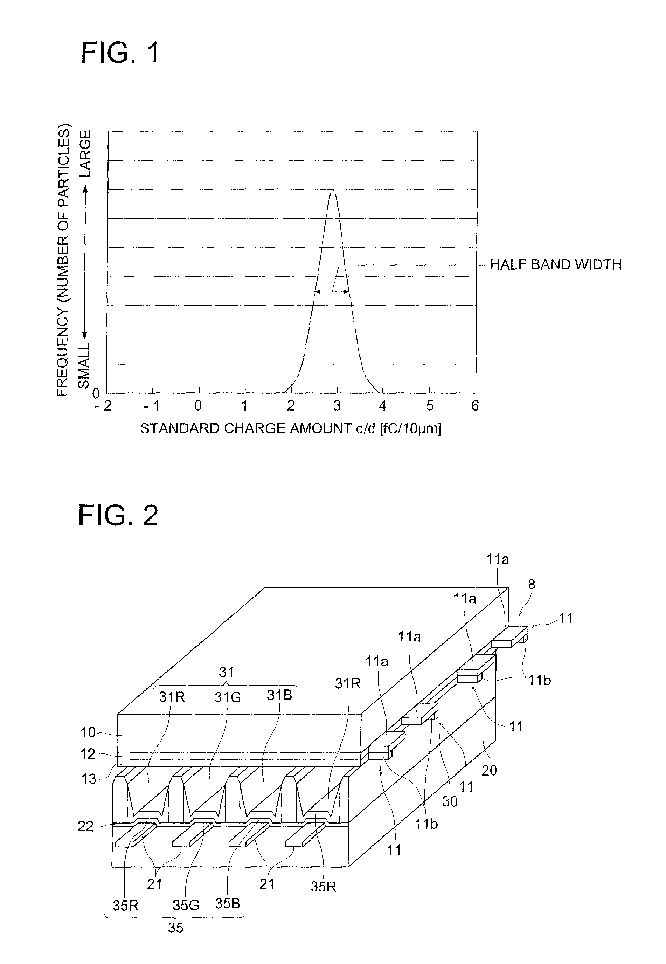

First, "a fluorescent substance" according to this invention will be explained referring to fig. 1.

Said fluorescent substance is a fluorescent substance of (Yₓ,Gd₁₋ₓ)BO₃:Eu_{y} (0.4 ≤ x < 0.9, 0 < y ≤ 0.3), comprising a mother substance of (Yₓ,Gd₁₋ₓ)BO₃ and an activator of Eu_{y}, and emits fluorescence of red color by excitation. Said fluorescent substance is a particle cluster comprising many particles and a profile of a charge amount vs. number distribution of the particles exhibits distribution as that of fig. 1 when particle size d and charge amount q of each particle are measured.

A profile of a charge amount vs. number distribution shown in fig. 1 is a distribution curve of a charge amount vs. number of particles, which shows how many particles having charge amount q are present to provide distribution on the whole particles, when charge amount q of each particle and the number of particles having said charge amount q are set and plotted on abscissa and ordinate, respectively. In this example embodiment, as "charge amount q of each particle" is "standard charge amount q/d" which is charge amount q of each particle normalized (divided) by particle size d, is applied.

Specifically, said fluorescent substance is provided with a positive polarity, that is, each particle is essentially positively charged, and satisfies the following conditions (1) as an essential condition. Said fluorescent substance preferably further satisfies following condition of (2) or (3) and finally preferably satisfies the following whole conditions (1) - (3).
(1) With respect to particles having a positive polarity, a half-band width of standard charge amount q/d is 0.5 - 2.0 (preferably 0.5 - 1.0) (fC/10 µm) (refer to fig. 1). (2) With respect to particles having a positive polarity, a half-band width of standard charge amount q/d is 1.0 - 4.5 (preferably 0.5 - 1.0) (fC/10 µm) (refer to fig. 1). (3) The number of particles having a positive polarity is over 95% against the total number of particles.

Herein, in this embodiment, E-SPART ANALYZER (an analyzer manufactured by Hosokawa Micron Co., Ltd., hereinafter referred to as "E-SPART Analyzer") as a charge amount distribution analyzer is utilized for measurement of particle size d and charge amount q of each particle of said fluorescent substance, the above-described standard charge amount q/d is a value calculated by said E-SPART Analyzer and is a converted value when the mean particle size of the whole particles, charge amount q of which has been measured, is 10 µm.

This E-SRART Analyzer employs a method to utilize a double beam frequency shift type laser Doppler velocity meter and elastic wave to make perturbation of movement of a particle, and air is blown against a fluorescent substance electrostatic adsorbed on an iron powder carrier which has been triboelectric charged to fly said fluorescent substance and catching movement of the fluorescent substance in an electric field, whereby data of particle size d and charge amount q of each particle are obtained.

Herein, charge amount q is proportional to the third power of particle size d, when charge of each particle is present homogeneously on the whole particle in a fluorescent substance, however, in practice, charge amount q is proportional to particle size d itself. Therefore, in this embodiment, a profile of a charge amount vs. number distribution of said fluorescent substance is calculated primarily by a value of charge amount q divided by particle size d (that is a value eliminating an effect of particle size).

An index of whether a wave shape in the above-described profile of a charge amount vs. number distribution is sharp or not is defined by a half-band width, and a wave shape in the above-described profile of a charge amount vs. number distribution is the sharper when the half-band width at half maximum is the smaller. In the case that a wave shape in a profile of a charge amount vs. number distribution is sharp, there exist many particles having similar standard charge amount q/d to each other to make homogeneous charging ability of each particle of said fluorescent substance, resulting in excellent response at the time of discharging of said fluorescent substance.

Next, a manufacturing method of the above-described fluorescent substance will be explained.

The above-described fluorescent substance is prepared by a manufacturing method including (A) a precursor forming process to form a precursor of a fluorescent substance by mixing a solution containing constitutive metal elements of a fluorescent substance, (B) a drying process, after a precursor forming process, to dry a precursor having been prepared by the precursor forming process, and (C) a burning process, after a drying process, to form a fluorescent substance by burning a precursor having been dried.

In the following, each process to constitute said manufacturing method will be explained.

### (A) Precursor forming process

In a precursor forming process, a precursor is formed by a liquid phase method (a liquid phase synthesis method). An applicable liquid phase method is not specifically limited, however, co-precipitation method well known in the art may be employed and such as a sol-gel method or a reaction crystallization method may be also employed, depending on types and/or applications of a fluorescent substance. Among them, preferably employed is such as a co-precipitation method and a reaction crystallization method.

A precursor formed in a precursor forming process is a precursor of a fluorescent substance and the above described fluorescent substance is formed by drying and burning of crystals of said precursor at a predetermined temperature.

### (B) Drying process

In a drying process, a precursor prepared in a precursor forming process is dried at a predetermined drying temperature. The drying temperature is preferably in a range of 20 - 300 °C and more preferably in a range of 90 - 200 °C. A precursor may be directly dried in a drying process, and as such a drying method, either of an evaporation method or a spray drying method, in which a precursor is dried while being granulated, can be applied.

Herein, it is preferable to appropriately eliminate unnecessary salts by a conventional method such as filtration and/or washing and membrane separation before the drying process, and it is further preferable to separate a precursor from a liquid by means of such as filtration and centrifugal separation.

### (C) Burning process

In a burning process, a precursor having been dried in the above-described drying process is burned to form a fluorescent substance.

For example, a precursor having been dried is filled in an alumina port and said precursor is burned at a predetermined temperature, whereby a fluorescent substance can be formed. In a burning process, burning temperature is preferably set in a range of 1,000 - 1,700 °C and burning time is preferably set at 0.5 - 40 hours. Burning time may be appropriately adjusted depending on the type of a fluorescent substance, and a gas atmosphere during burning may be appropriately an inert gas atmosphere (such as a nitrogen gas atmosphere), an air atmosphere, an oxygen gas atmosphere, or a reduction gas atmosphere; or an atmosphere comprising a combination of these gas atmospheres. A burning apparatus is not specifically limited, however, an apparatus such as a box furnace, a crucible furnace and a rotary kiln is preferably utilized as said burning apparatus.

Herein, when a burning treatment is finished, the obtained burned substance may be subjected to a treatment of such as dispersion, washing, drying and sieve classification.

In the above manufacturing method, precursor particles having excellent dispersibility and/or homogeneity are formed by a liquid phase method in a precursor forming process, and a fluorescent substance having homogeneous composition and a state of the surface of each particle can be prepared by controlling burning conditions in a burning process, which results in turn that said fluorescent substance can satisfy the conditions of aforesaid items (1) - (3).

Further, to adjust particle size distribution of each particles of a fluorescent substance to be narrow (for example, to perform classification after a ball mill dispersion) after a treatment of a burning process greatly contributes to satisfy the condition of above items (1) - (3) in a fluorescent substance.

To satisfy the above-described conditions of (1) - (3) in a fluorescent substance, it is important that each particle itself is homogeneously prepared and which is specifically important with respect to the surface layer which cannot avoid a dangling bond. In such a point of view, it is most preferable to select a liquid phase method, which is essentially capable of homogeneously forming a precursor, in a precursor forming process.

On the other hand, since, in a precursor forming process, plural times of treatments of burning and/or grinding are required when a solid phase method is selected, it cannot be said sufficient even though a charge amount vs. number distribution is improved, the number of manufacturing processes may increase to result in cost up, and defects may remain on the surface of each particle. Therefore, in a precursor forming process, a liquid phase method is preferably selected.

Further, in a burning process, since burning conditions will greatly affect crystallization and Eu distribution in each particle which in turn affects homogeneity of each particle, control of burning temperature and burning time is important for burning, that is, it is preferable to design burning temperature (a temperature raising rate and/or a temperature descending rate) and burning time.

Herein, in a precursor forming process, at least one type of element among a rare earth group element, an alkaline earth group metal element, and transition metal elements may be incorporated as a co-activator at the time of the manufacturing.

According to the above fluorescent substance, since it satisfies above condition (1), many particles provided with a similar charge amount (q/d) to each other are present and each particles simultaneously exhibit a similar discharge characteristic. Therefore, discharge voltage becomes approximately same among particles each other to results in an excellent discharge response (refer to the following example).

Next, "a plasma display panel" according to this invention will be explained referring to fig. 2.

Plasma display panel 8 is equipped with front plate 10 and back plate 20 which is opposing to front plate 10, being arranged on the display side.

Front plate 10 is provided with visible light transmitting property and performs various information displays on the substrate. Said front plate 10 functions as a display image plane and is constituted of a material such as soda lime glass (blue flat glass) which transmits visible light. Thickness of front plate 10 is preferably in a range of 1 - 8 mm and more preferably approximately 2 mm.

On front plate 10, such as display electrode 11, dielectric substance layer 12 and protective layer 13 are arranged.

Plural display electrodes 11 are provided on the surface, which opposes to back surface plat 20, of front plate 10, and each display electrode 11 is regularly arranged. Display electrode 11 is constituted of transparent electrode 11a which is formed in a broad band shape and bus electrode 11b which is formed similarly in a band shape, and has a structure in which bus electrode 11b is accumulated on transparent electrode 11a. Bus electrode 11b is formed so as to have a width narrower than that of transparent electrode 11a. With respect to display electrode 11, two display electrodes 11 and 11 form a group and each display electrode is arranged facing to each other to keep a predetermined discharge gap.

As transparent electrode 11a, a transparent electrode made of such as tin oxide film can be utilized, and the sheet resistance is preferably not more than 100 Ω. Transparent electrode 11a is preferably has a width of 10 - 200 µm.

Bus electrode 11b is for decreasing resistance and formed by such as sputtering of Cr/Cu/Cr. Bus electrode 11b is preferably provided with a width in a range of 5 - 50 µm.

Dielectric substance layer 12 covers the whole surface on which display electrode 11 of front plate 10 is arranged. Dielectric substance layer 12 is comprised of a dielectric substance such as low melting point glass. Dielectric substance layer 12 has a thickness preferably in a range of 20 - 30 µm. The surface of dielectric substance layer 12 is totally covered by protective layer 13. As protective layer 13, MgO film can be utilized. Protective layer 13 has a thickness preferably in a range of 0.5 - 50 µm.

On back plate 20, such as address electrode 21, dielectric substance layer 22, barrier wall 30 and fluorescent substance film 35 (35R, 35G, 35B) are arranged.

Back plate 20 is constituted of such as soda lime glass similar to front plate 10. Thickness of back plate 20 is preferably in a range of 1 - 8 mm and more preferably approximately 2 mm.

Plural address electrodes 21 are provided on the surface, which opposes to front plate 20, of back plate 20. Address electrode 21 is formed also in a band shape similar to transparent electrode 11a and bus electrode 11b. Plural address electrodes 21 are arranged perpendicular to display electrodes 11 and address electrodes 21 are arranged parallel to each other keeping the same interval.

Address electrode 21 is constituted of a metal electrode of such as a Ag thick layer electrode. Thickness of address electrode 21 is preferably in a range of 100 - 200 µm.

Dielectric substance layer 22 covers the surface, on which address electrode 21 is arranged, of back plate 20 totally. Dielectric substance layer 22 is comprised of a dielectric substance such as low melting point glass. Thickness of dielectric substance layer 22 is preferably in a range of 20 - 30 µm.

On the both sides of address electrode 21 under dielectric substance layer 22, barrier wall 30 formed in a long length form is arranged. Barrier layer 30 is arranged standing from the back plate 20 side to the front plate 10 side, and is perpendicular to display electrode 11. Barrier wall 30 is comprised of a dielectric substance such as low melting point glass. Width of barrier wall 30 is preferably in a range of 10 - 500 µm and more preferably approximately 100 µm. Height (thickness) of barrier wall 30 is generally 10 - 100 µm and preferably approximately 50 µm.

The above-described barrier wall 30 forms plural fine discharge spaces 31 (hereinafter, referred to as "discharge cell 31"), which are spaces between back plate and front plate 10 divided into a stripe form, and a discharge gas primarily comprising a rare gas such as Ar, Xe, He, Ne and Xe-Ne shielded inside of each discharge cell 31.

In discharge cell, any one of fluorescent substance layers 35R, 35G and 35B, which is constituted of fluorescent substance emitting any one of red (R), green (G) and blue (B) is arranged in a regular order. In one discharge cell 31, many crossing points of display electrode 11 and address electrode 21 in a plane view are present, and one pixel is comprised of three emission units R, G and B which are continuous in the right and left directions. Thickness of each of fluorescent substance layer 35R, 35G and 35B is not specifically limited, however, is preferably in a range of 5 - 50 µm.

Fluorescent substance layers 35R and 35B are comprised of fluorescent substance paste containing a fluorescent substance as a raw material, while fluorescent substance layer 35G is comprised of fluorescent substance paste containing a fluorescent substance according to this invention as a raw material. These fluorescent substance pastes are prepared by dissolving a fluorescent substance and binder resin such as ethyl cellulose in a solvent such as terpineol and by a dispersion treatment of the resulting solution.

As for formation of fluorescent substance layers 35G, 35R and 35B, said fluorescent substance paste is coated on the side and the bottom of discharge cell 31 or filled in the interior of discharge cell 31 followed by being dried and burned, whereby fluorescent substance layers 35G, 35R and 35B can be formed on the side and the bottom of discharge cell 31.

Herein, at the time of coating or filling of a fluorescent substance in discharge cell 31 (31R, 31G, 31B), a method such as a screen print method, a photolithography method, a photo-resist film method and an inkjet method can be applied. For example, fluorescent substance paste is printed on the surface of a glass substrate in a predetermined pattern by a screen print method and the formed coated layer is dried, whereby a patterned layer of fluorescent substance paste can be formed. This screen print method is a coating method specifically useful with a composition containing a fluorescent substance and glass frit as an inorganic substance. Further, as a drying condition of a coated layer formed by printing, for example, a heating temperature of 60 - 100 °C and a heating time of 5 - 30 minutes are preferable. Further, layer thickness of a patterned layer after having been dried is set to, for example, 5 - 200 µm.

Further, an inkjet method is specifically preferable because fluorescent substance paste can be coated or filled between barrier walls 30 easily, in excellent precision and uniformly at a low coat, even in the case of a pitch of barrier walls 30 being narrow and discharge cell 31 being finely formed.

In the above plasma display panel 8, at the time of display, discharge cell 31 to perform display is selected, by selectively performing trigger discharge between address electrode 21 and either one display electrode 11 among one group of display electrodes 11 and 11. Thereafter, in selected discharge cell 31, ultraviolet rays attributed to a discharge gas is generated by performing sustain discharge between one group of discharge cells 11 and 11, whereby visible light is emitted from fluorescent substance layers 35R, 35G and 35B.

According to above plasma display 8, since fluorescent substance layer 35G contains the above-described fluorescent substance as a raw material, discharge voltage becomes approximately same among particles each other resulting in excellent discharge response (refer to the following example).

### EXAMPLE

In the following, this invention will be detailed referring to examples; however, the scope of the invention is not limited thereto.

### Preparation of Fluorescent Substance and Characteristics

### (1) Preparation of Fluorescent Substance

### (1.1) Preparation of Fluorescent Substances 1 - 5

Fluorescent substances 1 - 5 were prepared by "a liquid phase method".

Specifically, first, water was designated as "solution D"; yttrium nitrate hexa hydrate, gadolinium nitrate and europium nitrate was dissolved in 500 ml of water so as to make a yttrium ion concentration of 0.4659 mol/l, a gadolinium ion concentration of 0.2716 mol/l, an activator (europium) concentration of 0.0388 mol/l and a co-activator (indium) concentration of 0.007 mol/l, and the resulting solution was designated as "solution E". Separately from these, boric acid was dissolved in 500 ml of water so as to make a boron ion concentration of 0.7763 mol/l, and the resulting solution was designated as "solution F".

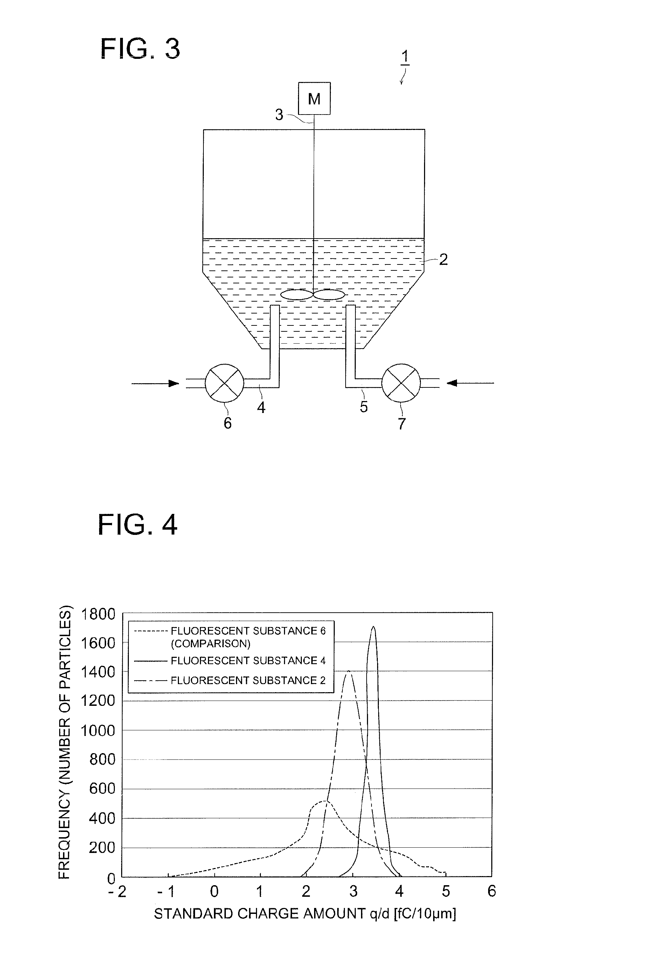

After preparing solution E and solution F, precursors 1 - 5 of each fluorescent substance 1 - 5 were formed by use of double jet type reaction apparatus 1 shown in fig. 3 (a precursor forming process).

Double jet type reaction apparatus 1 will now be detailed. Said double jet type reaction apparatus 1 is capable of simultaneous addition of at least two types of liquids at a same rate and dispersion. Double jet type reaction apparatus 1 is equipped with reaction vessel 2 to mix liquids and stirring fan 3 to stir the interior of reaction vessel 2, and each one end of two pipes 4 and 5, which is capable of passing through the interior of reaction vessel 2, is connected to the bottom of reaction vessel 2. Nozzles 6 and 7 are arranged in each of pipes 4 and 5. In double jet type reaction apparatus 1 having such a construction, a tank storing a liquid is connected to each other end of pipes 4 and 5, and liquids are simultaneously flown into the interior of reaction vessel 2 at a same rate through two pipes 4 and 5 from each tank followed by being mixed in the interior of said reaction vessel 2

In said precursor forming process, specifically, solution D was charged in reaction vessel 2 and said solution D was stirred with stirring fan 3 while keeping said solution D at 60 °C. In this state, solution E and solution F kept at 40 °C were added and flown at a same rate into reaction vessel 2 at an addition rate of 100 ml/min through pipes 4 and 5 respectively, and the mixed solution comprising solution D, solution E and solution F was kept being stirred for 10 minutes, whereby "precursor 1" of fluorescent substance 1 was prepared.

Thereafter, precursor 1 was washed by use of an ultra-filtration apparatus (Ultra-Filtration Film: NTU-3150, manufactured by Nitto Denko Corp.) until the electric conductivity reaches 30 mS/cm, and precursor after having been dried was filtered and dried (a drying process). In a similar manner to this, "precursors 2 - 5" were prepared by adjusting addition rates of solution B and solution C so as to make composition distributions described in following table 1.

After finishing a treatment of a precursor forming process, each of precursors 1 - 5 was burned in an air atmosphere at 1,400 °C for 3 hours, whereby fluorescent substances 1 - 5 were prepared (a burning process). Herein, with respect to a burning condition of precursor 4, a temperature raising rate to raise temperature up to 1,400 °C from room temperature and temperature descending rate to descend temperature down to room temperature from 1,400 °C were set to twice of that in the case of other precursors 1 - 3 and 5.

Thereafter, each of florescent substances 1 - 5, a predetermined amount of 1 mm alumina balls and pure water were charged in a pot for a ball mill and ball mill dispersion was preformed for 3 hours, and fluorescent substances 1 - 5 after dispersion was filtered and dried to complete preparation of fluorescent substances 1 - 5.

### (1.2) Preparation of Fluorescent Substance 6

Fluorescent substance 6 was prepared by use of "a solid phase method".

Specifically, yttrium oxide(Y₂O₃), gadolinium oxide (Gd₂O₃), europium oxide(Eu₂O₃), boric acid(H₃BO₃) and indium oxide as raw materials having respectively a ratio of 0.6 : 0.3 : 0.1 : 1.0 : 0.02 were blended and the resulting mixture was mixed with an appropriate amount of flux (AlF3, BaCl2) in a ball mill.

Thereafter, the obtained mixture was burned under a oxidation atmosphere at 1,400 °C for 3 hours and the burned product was ground by a ball mill. The burned product after having been ground was burned and ground again under the same condition as described above, and the final product was designated as "fluorescent substance 6".

### (2) Characteristics of Fluorescent Substances 1 - 6

### (2.1) Measurement of Composition Distribution

100 particles from each of fluorescent substances 1 - 6 were extracted, and component ratios of Y and Eu of each particle, with respect to fluorescent substances 1 - 6, were measured by use of a secondary ion mass spectrometer (SIMS) apparatus to calculate the component distribution. The calculated result is shown in following table 1.

### (2.2) Measurement of Ratio of Homogeneous Particle

100 particles from each of fluorescent substances 1 - 6 were extracted and the interior composition distribution of each particle, with respect to each of fluorescent particles 1 - 6, was measured by means of characteristic X-rays analysis, utilizing a transmission electron microscope (TEM), to calculate the ratio of micro-visually homogeneous particles (distribution of not more than 20%). The calculated result will be shown in following table 1.

### (2.3) Measurement of Size Distribution of Fluorescent Substance

Size distribution of each of fluorescent substances 1 - 6 was measured by use of particle size analyzer (Microtrack HRA Particle Size Analyzer Model No. 9320-X100) applying a laser diffraction scattering method. Specifically, a mean particle size of each of fluorescent substances 1 - 6 was derived, and monodispersiblity with respect to each of fluorescent substances 1 - 6 was calculated based on a predetermined equation from the whole mean particle size data; said calculated result was designated as "particle size distribution". The result is shown in following table 1. (2.4) Measurement of Charge Distribution of Fluorescent Substance

Charge amount q and particle size d of each particle of fluorescent substances 1 - 6 were measured by use of "E-SPART Analyzer". Thereafter, charge amount q of each particle normalized (divided) by particle size d, that is a standard charge amount q/d, was determined for each particle, and how many (number of) particles having said standard charge amount are present in each of fluorescent substances 1 - 6 was determined, whereby a profile of a charge amount vs. number distribution was formed. Simultaneously with this, a ratio (%) of a number of particles of positively charged particles against the total number of particles was also determined. Profiles of a charge amount vs. number distribution of fluorescent substances 2, 4 and 6 are shown in fig. 4 and a half-band width and a ratio (%) of a number of particles having positive polarity, determined from said profile of a charge amount vs. number distribution, are shown in following table 1 for each of fluorescent substances 1 - 6.

**Table 1**

| Fluorescent substance panel No. | Composition distribution (%) | | Ratio of homogeneous particles (%) | Particle size distribution | Charge amount (10⁻¹⁵ C/10 µm) | Half band Width | Ratio of particles having positive polarity (%) |
|---|---|---|---|---|---|---|---|
| | Y | Eu | | | | | |
| 1 | 11 | 7 | 88 | 28 | 1.8-3.8 | 1.5 | 100 |
| 2 | 13 | 9 | 85 | 26 | 2.0-4.2 | 1.3 | 100 |
| 3 | 15 | 11 | 85 | 28 | 2.0-3.8 | 1.0 | 100 |
| 4 | 5 | 4 | 96 | 18 | 2.7-4.0 | 0.6 | 100 |
| 5 | 26 | 25 | 55 | 45 | 0-5.0 | 2.5 | 95 |
| 6 | 41 | 44 | 35 | 50 | -1.0-5.5 | 3.5 | 90 |

It is clear from fig. 4 and table 1 that fluorescent substances 1 - 4 exhibit a small value of composition distribution of Y and Eu and a large value of a ratio of homogeneous particles. Further, it is clear that fluorescent substances 1 - 4, compared to comparative fluorescent substances 5 and 6, exhibit a smaller half-band width of standard charge amount q/d and a shaper form of a profile of a charge amount vs. number distribution.

### 2. Preparation of Fluorescent Substance Paste

A suspension of each of fluorescent substances 1 - 6 was prepared by blending each of fluorescent substances 1 - 6 described above and the following additives at the following composition ratio.
Fluorescent substances 1 - 6: 45 weight%
Binder resin: 5 weight%
Terpineol: 50 weight%

A suspension of each of fluorescent substances 1 - 6 was subjected to a dispersion treatment by use of a horizontal continuous media homogenizer (SL-C5, manufactured by VMA-GETZNANN Corp.) to prepare "fluorescent substance pastes 1 - 6".

The dispersion condition is as follows.
Disc rotation number: 5,520 rpm
Type of beads: zirconia
Beads diameter: 0.3 mm
Herein, the numerical portion of an ending of each of fluorescent substance pastes 1 - 6 corresponds to that of fluorescent substances 1- 6; one comprising fluorescent substance 1 as a raw material is fluorescent substance paste 1, and similarly to this, those comprising fluorescent substances 2 - 6 as a raw material are fluorescent substance pastes 2 - 6.

### 3. Preparation of Plasma Display Panel and Characteristics Thereof

### (1) Preparation of Plasma Displays 1 - 6

Plasma display panels 1 - 6 similar to one shown in fig. 1 were prepared by use of fluorescent substance pastes 1 - 6. Specifically, fluorescent substance pastes 1 - 6 were screen coated on the back plate equipped with an address electrode and barrier walls on the both sides of said address electrode. Thereafter, said fluorescent substance pastes 1 - 6 were dried at 120 °C, and further, the fluorescent substance pastes 1 - 6 after having been dried were burned at 500 °C for 1 hour, whereby a fluorescent substance layer was formed between barrier walls on the back plate.

Then, the back plate on which a fluorescent substance layer was formed and the front plate, which is equipped with a display electrode, a dielectric substance layer and a MgO protective layer, were faced to each other to be pasted up, whereby the circumference of their substrates was sealed with sealing glass. At this time, a gap of approximately 1 mm was set between the back plate and the front plate. Then, a mixed gas comprising xenon (Xe) and neon (Ne) was sealed between the back plate and the front plate, and aging was performed while keeping a state of air tightness between the substrates, whereby "plasma display panels 1 - 6" corresponding to fluorescent substance pastes 1 - 6 were prepared.

Herein, the numerical portion of an ending of each of plasma display panels 1 - 6 corresponds that of fluorescent substance pastes 1 - 6, and one in which fluorescent substance paste 1 is screen coated is plasma display panel 1 and similar to this those in which fluorescent substance pastes 2 - 6 are screen coated are plasma display panels 2 - 6.

### (2) Characteristics of Plasma Display Panels 1 - 6

### (2.1) Measurement of Address Peak Intensity and Address Cycle Time

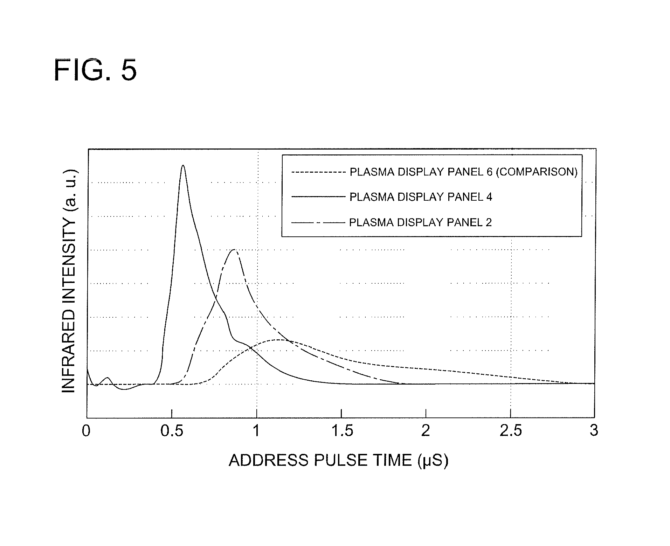

When discharge sustain pulses having a voltage of 185 V and a frequency of 200 kHz were continuously applied against each of plasma displays 1 - 6 for 1,000 hours, IR intensity (intensity of infrared rays) of discharge generated by address discharge was measured to determine the address peak intensity and address cycle time. The measurement results will be shown in following table 2 and fig. 5.

In table 2, each value of "address peak intensity" and "address cycle time" was shown as a relative value (%) when the value of plasma display 5 was "100". When a value of address peak intensity is the higher, response of address discharge is more excellent; when a value of address cycle time is the lower, response of address discharge is more excellent. (2.2) Judgment of Presence of Address Miss

Similar to (2.1) described above, discharge sustain pulses were kept being applied against each of plasma displays 1 - 6, and whether an address miss was present or not at the time of address discharge was measured. The measured result will be shown in following table 2. Herein, whether an address miss was present or not was judged by whether a flicker was present or not by observing the display state of each of plasma displays 1 - 6, and it has been judged that address miss was present even with one flicker and that no address miss was present without any address miss.

**Table 2**

| Plasma display No. | Address peak intensity (%) | Address cycle time (%) | Address miss | Remarks |
|---|---|---|---|---|
| 1 | 220 | 60 | None | Invention |
| 2 | 230 | 60 | None | Invention |
| 3 | 250 | 60 | None | Invention |
| 4 | 320 | 50 | None | Invention |
| 5 | 100 | 100 | Present | Comparison |
| 6 | 60 | 150 | Present | Comparison |

It is clear from table 2 and fig. 5 that fluorescent substances 1 - 4, in which a half-band width of standard charge amount q/d is within a range of 0.5 - 2.0 (fC/10µm), exhibit excellent address discharge response as well as improved stability without any address miss.

## Claims

1. A fluorescent substance comprising a plurality of particles of (Yₓ,Gd₁₋ₓ)BO₃:Eu_{y} (1.4 ≤ x < 0.9, 0 < y ≤ 0.3), wherein a half-band width in a profile of "charge amount vs. number distribution" of the particles measured by a charge amount distribution analyzer is 0.5 - 2.0 (fC/10 µm).

2. The fluorescent substance described in aforesaid claim 1, wherein a charge amount of each particle is |1.0 - 4.5|(fC/10 µm).

3. The fluorescent substance described in aforesaid claims 1 or 2, wherein the number of particles having a positive polarity is over 95% against the total number of particles.

4. The fluorescent substance described in any one of aforesaid claims 1 - 3, **characterized by** being synthesized by a liquid phase method.

5. The fluorescent substance described in any one of aforesaid claims 1 - 4, **characterized by** containing at least one type of elements comprising rare earth elements, alkaline earth elements, and transition metal elements as a co-activator.

6. A plasma display panel equipped with a discharge cell in which a discharge phenomenon is generated, and a fluorescent substance layer which emits fluoresce by being excited in accordance with a discharge phenomenon in the aforesaid discharge cell, wherein the aforesaid fluorescent substance layer contains the fluorescent substance described in any one of claims 1 - 5 as a raw material.
